# EUROPEAN PATENT SPECIFICATION

(11) **EP 1 277 399 B1**
(45) Date of publication and mention of the grant of the patent: **27.05.2009**
(21) Application number: 02255045.3
(22) Date of filing: 18.07.2002
(51) Int. Cl.: A01L 7/04

(54) **Horse shoe stud**
Stollen für Hufeisen
Crampon pour un fer à cheval

(30) Priority: 19.07.2001 GB 0117552
(43) Date of publication of application: 22.01.2003
(73) Proprietor: Jolly, Bruce, Bewdley DY12 1LN (GB)
(72) Inventor: Jolly, Bruce, Bewdley DY12 1LN (GB)
(74) Representative: Bailey, Richard Alan

(56) References cited:
- DE-A- 19 959 846
- DE-C- 756 700
- DE-U- 29 611 252
- GB-A- 184 985
- GB-A- 206 426

## Description

This invention relates to a stud for a horse shoe.

It is well known to provide horse shoes with studs to reduce the risk of a horse slipping. Typically, the horse shoe is provided with a screw threaded opening into which part of a stud may be screwed to secure the stud to the horse shoe. Studs of different shapes and sizes are available to suit various ground conditions. The studs are typically only secured to the horse shoe for short periods of time, and when not secured to the horse shoe, the openings formed in the horse shoe are typically plugged with cotton wool or a similar material in an attempt to prevent dirt entering the opening. Such plugging of the opening is rarely completely successful in preventing dirt or grit from entering the opening.

The procedure for securing a known stud of this type to a horse shoe involves removing the cotton wool or other material plug from the hole, cleaning the screw threads of the hole with a tap to remove any grit or dirt which passed the plug, and then securing the stud in position using a suitable spanner. The cleaning operation is time-consuming and there is also the risk that the horse may kick or snatch its foot away whilst the tap is located within the opening which may result in damage to the tap and/or cause injury to the horse or its handler. In view of the difficulties associated with cleaning the opening, this operation may be omitted or not properly completed. Failure to properly clean the screw threads can result in difficulties in securing the stud in position and in dirt or grit becoming trapped between the stud and the horses foot which could lead to discomfort or lameness. Even where the cleaning operation is performed properly, it is difficult to prevent dirt or grit being pushed down the opening by the tap to a position in which it cannot easily be removed.

GB 184985 and DE 19959846 both describe horse shoe studs with threaded regions.

It is an object of the invention to provide a stud for a horse shoe in which the operation of fitting the stud to the horse shoe can be simplified.

According to the present invention there is provided a horse shoe stud including a screw threaded region, a slot being formed in the screw threaded region, the slot being angled to the axis of the screw threaded region.

The provision of the slot allows dirt or grit to escape from the screw threads, during fitting. As a result, the stud can be fitted without first cleaning the threads of the screw threaded opening with less risk of dirt or grit being trapped between the stud and the horses foot.

The free end of the screw threaded region is conveniently recessed to form a volume within which any dirt or grit trapped between the stud and the horses foot can be contained to reduce the risk of such dirt or grit being pushed against the horses foot.

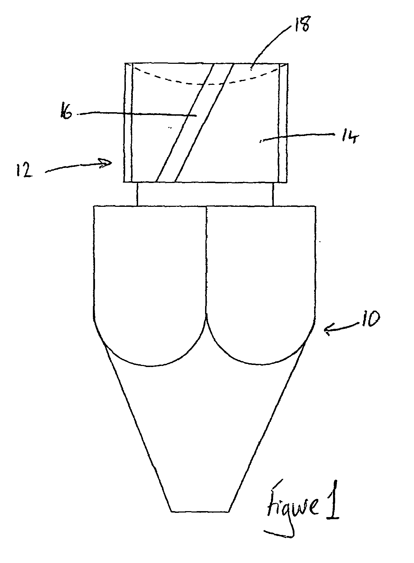

The invention will further be described, by way of example, with reference to the accompanying drawing (Figure 1) which is a diagrammatic side view of a stud in accordance with an embodiment of the invention.

The horse shoe stud illustrated in Figure 1 comprises a stud body 10 from which a projection 12 extends. The projection 12 includes an externally screw threaded region 14 having screw threads of dimensions and pitch designed to co-operate with the screw threads of a threaded opening formed in a horse shoe with which the stud is to be used.

The screw threaded region 14 is formed with a slot 16 which extends along the length of the screw threaded region 14. The slot 16 may be arranged parallel to the axis of the screw threaded region 14, but in the arrangement of Figure 1 the slot 16 is angled to the axis of the screw threaded region 14. Further, although in the illustrated arrangement the slot 16 extends over the full length of the screw threaded region 14, it may, if desired, stop short of the end of the screw threaded region 14 closest to the stud body 10.

The free end of the screw threaded region 14, in other words the end thereof remote from the stud body 10, is formed with a recess 18.

The stud body 10 may be of any desired shape and size to render the stud suitable for use with particular ground conditions, for example for use on grass or for use in icy conditions. The stud is conveniently shaped to include a portion of conventional hexagonal or square form to enable the use of a spanner with the stud when securing or removing the stud.

In order to fit the stud to a horse shoe, the cotton wool or other material used to plug the opening of the horse shoe is removed and the screw threaded region 14 of the stud introduced in to the opening. The stud is then rotated, either by hand or using a spanner, and finally driven home using a spanner. It will be appreciated that the process does not include a step of cleaning the opening using a tap prior to fitting the stud. The reason for this is that the provision of the slot 16 allows the stud to be fitted without first cleaning the opening. Dirt or grit located within the threads of the opening that would otherwise prevent attachment of the stud can escape from the threads into the slot 16. By angling the slot 16, such dirt or grit tends to ride along the slot 16. Where the slot 16 extends over the full length of the screw threaded region, the angling of the slot may allow dirt and grit to escape from the opening. Where the slot does not extend over the full length of the screw threaded region, then the angling of the slot may be to urge dirt or grit towards to the recess 18. Any dirt or grit located within the opening which does not enter the slot 16 becomes trapped between the stud and the horses foot. However, as the stud is provided with the recess 18, a volume is formed within which such dirt or grit can be contained avoiding the dirt or grit being forced against the horses foot and thus reducing discomfort of the horse.

It will be appreciated that by avoiding the necessity to clean the openings, the fitting operation is simpler, quicker and safer than would otherwise be the case.

Removal of the studs is achieved using the conventional technique, and after removal, the opening is plugged using cotton wool or another suitable material in the usual way.

Although the description hereinbefore is of a specific stud, it will be appreciated that the invention is applicable to studs of a range of shapes and sizes depending upon the ground conditions with which the stud is to be used and the design of the horse shoe with which the stud is to be used, and that the invention is not restricted to the specific design described and illustrated herein. Further, if desired, more than one slot may be provided.

## Claims

1. A horse shoe stud including a screw threaded region (14), a slot (16) being formed in the screw threaded region (14), and **characterised in that** the slot (16) is angled to the axis of the screw threaded region (14).

2. A stud as claimed in Claim 1, wherein the screw threaded region (14) is of uniform diameter along its length.

3. A stud as claimed in any one of the preceding claims, wherein a free end of the screw threaded region (14) is provided with a recess (18).

## Patentansprüche

1. Stollen für Hufeisen einschließend einen Bereich mit Schraubengewinde (14), eine Nut (16), die in dem Bereich mit Schraubengewinde (14) gebildet ist, und **dadurch gekennzeichnet ist, dass** die Nut (16) in einem Winkel zur Achse des Bereichs mit Schraubengewinde (14) angeordnet ist.

2. Stollen nach Anspruch 1, wobei der Bereich mit Schraubengewinde (14) einen einheitlichen Durchmesser längs seiner Länge aufweist.

3. Stollen nach einem der obenstehenden Ansprüche, wobei das freie Ende des Bereichs mit Schraubengewinde (14) mit einer Aussparung (18) bereitgestellt wird.

## Revendications

1. Crampon pour un fer à cheval incluant une région filetée (14), une rainure (16) étant formée dans la région filetée (14), et **caractérisé en ce que** la rainure (16) fait un angle par rapport à l'axe de la région filetée.

2. Crampon tel que revendiqué dans la revendication 1, dans lequel la région filetée (14) est de diamètre uniforme le long de sa longueur.

3. Crampon tel que revendiqué dans l'une quelconque des revendications précédentes, dans lequel une extrémité libre de la région filetée (14) est pourvue d'un évidement.
